# EUROPEAN PATENT SPECIFICATION

(11) **EP 3 315 835 B1**
(45) Date of publication and mention of the grant of the patent: **18.03.2020**
(21) Application number: 17198435.4
(22) Date of filing: 26.10.2017
(51) Int. Cl.: F16K 1/42, F25B 41/06, F16K 27/10, F16K 31/04

(54) **ELECTRIC VALVE AND ASSEMBLY METHOD THEREOF**
ELEKTRONISCHES VENTIL UND MONTAGEVERFAHREN DAFÜR
SOUPAPE ÉLECTRIQUE ET SON PROCÉDÉ D'ASSEMBLAGE

(30) Priority: 28.10.2016 JP 2016211370
(43) Date of publication of application: 02.05.2018
(73) Proprietor: Fujikoki Corporation, Tokyo 158-0082 (JP)
(72) Inventor: HISHIYA, Kohei, Setagaya-ku, Tokyo 158-0082 (JP)
(74) Representative: Schweiger, Martin

(56) References cited:
- EP-A1- 3 273 186
- WO-A1-2014/141555
- WO-A1-2016/021406
- JP-A- 2012 172 839
- JP-A- 2016 156 447
- NL-A- 244 660

## Description

### TECHNICAL FIELD

The present invention relates to an electric valve assembly method according to claim 1.

### BACKGROUND ART

As an electric valve, there is known an electric valve in which a valve body is continuously moved (pressed) down until a valve body urging spring is compressed by a predetermined amount even after the valve body sits on a valve seat portion and the valve body is pressed against the valve seat portion with a predetermined pressing force to become a valve closing state (for example, Patent Document 1).

An outline of such an electric valve assembly method will be described. First, a valve seat having a valve seat portion (a valve opening) is fixed by soldering to a bottom portion of a bottomed cylindrical valve main body of which an upper surface is opened. Next, an upper end surface portion of the valve main body and a lower end portion of a can are sealed and bonded by welding or the like. Finally, when a stator is positioned and fixed to the outer periphery of the can, the assembly of the electric valve is completed.

Here, the valve seat and the valve main body placed thereon are first soldered in an upside down state at the time of soldering the valve seat to the bottom portion of the valve main body. At this time, a melted brazing material rises along the outer periphery of the valve seat by a phenomenon such as surface tension and extended wetting and thus the brazing material is cured in an upward raised state.

At the next step, the upside down state is returned to the original state, the valve seat is fixed to a jig, and the upper end surface portion of the valve main body soldered onto the valve seat and the lower end portion of the can are sealed and bonded. Since assembly accuracy such as coaxiality and perpendicularity between components of such an electric valve also affects the positioning accuracy at the time of positioning and fixing the stator onto the outer periphery of the can, there is a problem that the yield of the electric valve is lowered.

This problem arises because the melted brazing material rises along the outer periphery of the valve seat, the brazing material is cured in the upward raised state, and the valve seat attached with the cured brazing material is fixed by the jig. As a result, the positioning reference cannot be ensured and the assembly accuracy is deteriorated.

EP 3 273 186 A1 shows a motor-operated valve having high-precision flow controllability. The motor-operated valve includes a rotor, a valve element, a back-pressure chamber, and an urging spring. In use, a rotational motion of the rotor is converted into a linear motion by screw threading between a male screw member and a female screw member. The valve element, which is housed in a valve body, is moved in an axial direction based on this linear motion. The back-pressure chamber is provided above the valve element to introduce a pressure in a valve port to the back-pressure chamber. The urging spring is for urging the male screw member and having a configuration in which a surface of one side of a thread formed on the male screw member urged by the urging spring is in contact with a surface on the other side of a thread formed on the female screw member.

WO 2014/141555 A1 shows a motor-operated valve being produced by means of a production method that includes a welding step. A first connector is inserted into a first interconnection hole that is formed at a valve housing and that interconnects the inside and outside of the valve housing. A second connector is inserted in a second interconnection hole. Tube members comprising nickel are sandwiched between the valve housing and the first connector and the second connector. Laser welding is performed along the peripheral direction of the first interconnection hole and the second interconnection hole in a manner so as to form a first welded section and a second welded section resulting from stainless steel, copper, and nickel each being melted and then solidified between the valve housing and the first connector and second connector.

JP 2012 172839 A shows a motor-operated valve, in which sliding frictional resistance around a compression coil spring during valve opening and closing can be reduced as much as possible when de-centering or the like of the compression coil spring is caused and even when axial misalignment or the like of a valve port is caused. The motor-operated valve is provided, wherein a lower winding end of the compression coil spring is engagingly locked by a spring receiving member. A ball is disposed between the spring receiving member and a valve element so as to make point contact at two vertical positions (with the spring receiving member and the valve element). An alignment recess composed of a substantially curved surface, such as a spherical surface, elliptic surface or conical surface, is provided so that its deepest portion is located at about a center of a lower surface of the spring receiving member. The sliding frictional resistance can be reduced by the alignment recess and the ball.

### CITATION LIST

### PATENT DOCUMENT

Patent Document 1: JP 2016-156447 A
Patent Document 2 : EP 3 273 186A1
Patent Document 3: WO 2014/141555 A1
Patent Document 4: JP 2012 172839 A

### SUMMARY OF THE INVENTION

### PROBLEM TO BE SOLVED BY THE INVENTION

There has been a demand for restricting a phenomenon in which the melted brazing material rises along the outer periphery of the valve seat.

Here, an object of the invention is to provide an electric valve assembly method having improved coaxiality between components and improved controllability and durability.

### MEANS FOR SOLVING PROBLEM

In order to solve the above-described problems, according to a representative aspect of the invention, there is provided an electric valve including: a valve shaft provided with a valve body; a valve seat provided with a valve seat portion with which the valve body comes into contact and from which the valve body separates; a valve main body having the valve seat fixed thereto by soldering; and a stepping motor with a rotor and a stator for elevating the valve shaft in a rotation state, in which a constricted portion is provided at an outer peripheral surface of a side surface of the valve seat.

Further, according to a representative aspect of the invention, there is provided an electric valve assembly method including: forming a constricted portion at an outer peripheral surface of a side surface of a valve seat; bonding a valve seat having a valve seat portion to a lower surface of a cylindrical valve main body while an upper surface of the valve main body faces downward; fixing the valve main body to a jig by using a lower outer peripheral surface of the constricted portion as a positioning reference surface while the upper surface of the valve main body faces upward after the valve seat is bonded to the valve main body; fixing a valve shaft provided with a valve body at the side of the valve body by aligning center axes of the valve shaft and the valve seat portion while the valve main body is fixed to the jig; and sealing and bonding a lower end portion to an upper surface of the valve main body having the valve shaft fixed thereto.

### EFFECT OF THE INVENTION

Since the electric valve and the assembly method thereof according to the invention have the above-described configuration, it is possible to restrict a phenomenon in which a melted brazing material rises along an outer periphery of a valve seat. For that reason, it is possible to provide the electric valve having enhanced coaxiality between components and improved controllability and durability and the assembly method thereof.

### BRIEF DESCRIPTION OF DRAWINGS

Fig. 1A is a longitudinal sectional view illustrating an electric valve according to a first embodiment of the invention and Fig. 1B is a diagram as viewed from A in Fig. 1A;
Fig. 2 is an enlarged view in the vicinity of a valve seat 11 illustrated in Figs. 1A and 1B;
Fig. 3 is a diagram illustrating a step of brazing brazing materials 110 and 120 to the valve seat 11 illustrated in Fig. 2 among steps of assembling the electric valve illustrated in Figs. 1A and 1B;
Fig. 4 is a diagram illustrating a step of fixing the valve seat 11 illustrated in Fig. 2 by a jig among steps of assembling the electric valve illustrated in Figs. 1A and 1B;
Fig. 5 is a longitudinal sectional view before a stator illustrated in Figs. 1A and 1B are positioned and fixed to an outer periphery of a can;
Fig. 6 is an external view of Fig. 5;
Fig. 7A is a longitudinal sectional view illustrating an electric valve according to a second embodiment of the invention and Fig. 7B is a diagram as viewed from A of Fig. 7A;
Fig. 8 is an enlarged view in the vicinity of a valve seat 11 illustrated in Figs. 7A and 7B;
Fig. 9 is a diagram illustrating a step of brazing brazing materials 110 and 120 to the valve seat 11 illustrated in Fig. 8 among steps of assembling the electric valve illustrated in Figs. 7A and 7B;
Fig. 10 is a diagram illustrating a step of fixing the valve seat 11 illustrated in Fig. 8 by a jig among steps of assembling the electric valve illustrated in Figs. 7A and 7B;
Fig. 11 is a longitudinal sectional view before a stator illustrated in Figs. 7A and 7B are positioned and fixed to an outer periphery of a can; and
Fig. 12 is an external view of Fig. 11.

### MODE(S) FOR CARRYING OUT THE INVENTION

### <First Embodiment

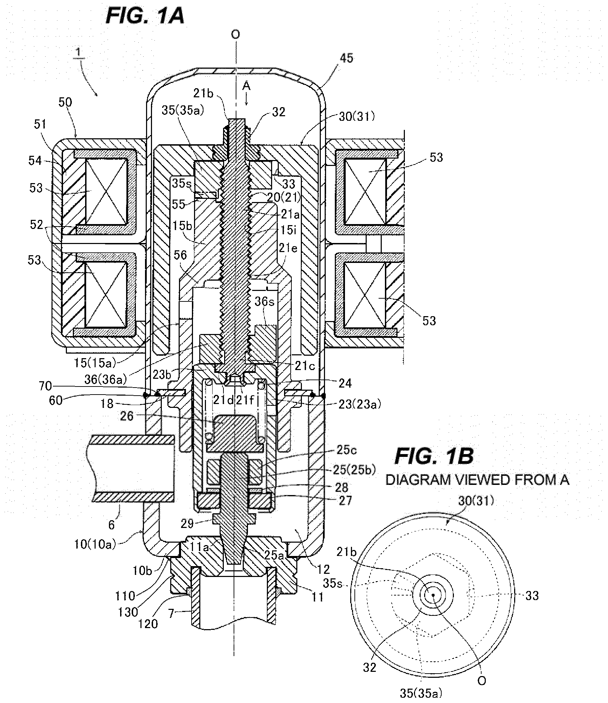

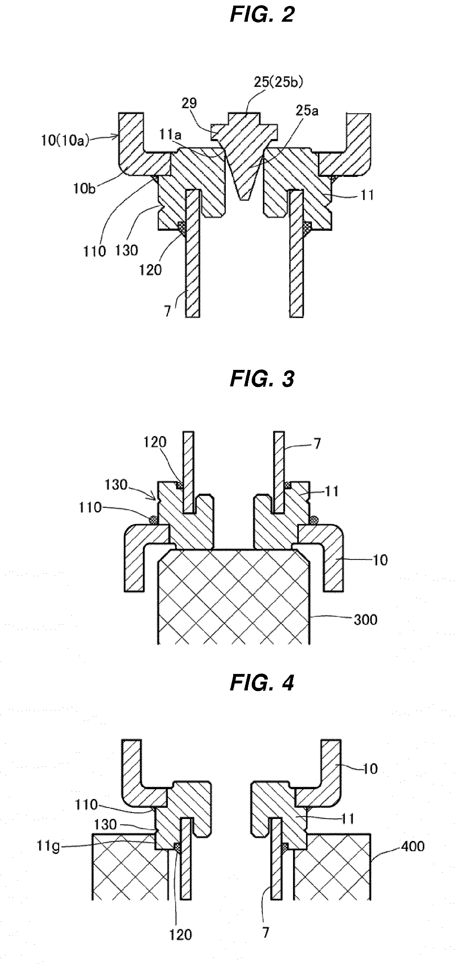

Fig. 1A is a longitudinal sectional view illustrating an electric valve according to a first embodiment of the invention, Fig. 1B is a diagram as viewed from A of Fig. 1A (a top view of a rotor), and Figs. 2 to 6 are diagrams used to describe a method of assembling the electric valve illustrated in Figs. 1A and 1B.

### (Configuration and Operation of Electric Valve 1)

Referring to Figs. 1A and 1B, the configuration and operation of an electric valve 1 will be described.

The electric valve 1 includes a bottomed cylindrical valve main body 10 of which an upper surface is opened, a can 45 of which a lower end portion is sealed and bonded to an upper end surface outer periphery 60 of the valve main body 10, a guide stem 15 attached with a flange-shaped disk 18 and fixed to an upper end surface inner periphery 70 of the valve main body 10 by welding or the like, a valve shaft 21 of which a male thread portion 21e formed at the outer periphery of a shaft-shaped portion 21a is threaded into a female thread portion 15i formed at a small-diameter upper portion 15b of the guide stem 15, a rotor 30 which is connected and fixed to the valve shaft 21 to rotate together, and a stator 50 which is fitted to the outer periphery of the can 45 to rotationally drive the rotor 30.

Here, a stepping motor includes the rotor 30 and the stator 50, a screw feeding mechanism includes the female thread portion 15i of the guide stem 15 and the male thread portion 21e of the valve shaft 21, and an elevation driving mechanism for elevating the valve shaft 21 in a rotation state includes the stepping motor and the screw feeding mechanism.

The valve main body 10 is made by pressing a metallic plate member formed of stainless steel or the like, a valve seat member (a valve seat) 11 having a valve seat portion (a valve opening) 11a is fixed to a bottom portion (a lower surface) 10b by soldering or the like, and the lower portion of the guide stem 15 is inserted into an upper portion thereof. A first inlet/outlet 6 (a copper horizontal pipe) formed as a pipe joint is bonded to one side of a valve chamber 12 of the valve main body 10.

Further, a second inlet/outlet 7 (a copper lower pipe) formed as a pipe joint is fixed to a valve seat 11 by soldering through a second brazing material 120. Here, a triangular groove 130 is formed at the outer peripheral surface of the side surface of the valve seat 11.

The valve shaft 21 includes a small-diameter portion 21b to which a connection body 32 of the rotor 30 is externally fitted, the male thread portion 21e which is threaded to the female thread portion 15i of the guide stem 15, and a lower connection portion 21c attached with a crimped portion 21f and a flange portion 21d below the male thread portion 21e, a cylindrical valve holder 23 attached with a ceiling portion 23b and slidably inserted into a large-diameter cylindrical body 15a of the guide stem 15 while its ceiling hole portion is connected and fixed to the crimped portion 21f is held by the lower end portion of the valve shaft 21, and the upper portion of the valve body 25 is slidably into the lower portion of the cylindrical portion 23a of the valve holder 23.

The valve body 25 includes an inverted truncated conical valve body portion 25a of which a lower portion is inserted into the valve seat portion (the valve opening) 11a having an inverted conical surface portion so that the valve body portion sits therein, a columnar body 25b which is connected to the upper portion of the valve body portion 25a, and a thick retaining sleeve 25c which is externally fitted and fixed to the upper portion of the columnar body 25b by press-inserting and welding and a flange portion 29 is provided at a predetermined portion of the lower portion of the columnar body 25b. Here, the outer diameter of (the upper portion of) of the columnar body 25b inserted though a guide hole of a bottom plate portion 27 fixed to the lower end portion of the valve holder 23 is set to be larger than the opening diameter of the valve seat portion (the valve opening) 11a. Such a valve body 25 is provided at the valve shaft 21.

The bottom plate portion 27 which is formed as a thick plate provided with a guide hole and retains (the retaining sleeve 25c of) the valve body 25 through a thin annular disk 28 is held and fixed to the lower end portion of the valve holder 23 by crimping and welding.

Meanwhile, a spring bearing member 26 having a hat-shaped cross-section is placed on the upper surface of the valve body 25, a valve body urging spring 24 which is a compression coil spring for pressing and cushioning the valve body is loaded in a compressed state between the flange portion of the spring bearing member 26 and the ceiling portion 23b of the valve holder 23, and the valve body 25 is urged upward by the valve body urging spring 24 at all times.

Here, the flange portion 29 provided at the valve body 25 and the bottom plate portion 27 forming the bottom portion of the valve holder 23 and provided at the valve holder 23 respectively serve as a fixed stopper and a movable stopper of an assembling stopper mechanism used for convenience during assembly (in order to detect the assembly reference position).

The valve shaft 21, the valve holder 23, the valve body 25, and the valve body urging spring 24 can elevate while substantially rotating together in a state (a valve opening state) where the valve body 25 is separated from the valve seat portion 11a.

Further, in order to set the control origin positions of the rotor 30 and the valve shaft 21, a fixed stopper 55 for the valve closing direction having a rectangular cross-section with a predetermined width, a predetermined height, and a predetermined depth protrude from the upper surface of the small-diameter upper portion 15b of the guide stem 15 and a fixed stopper 56 for the valve opening direction having a rectangular cross-section with a predetermined width, a predetermined height, and a predetermined depth protrude from the upper portion of the large-diameter cylindrical body 15a of the guide stem 15. Here, the control origin positions of the rotor 30 and the valve shaft 21 indicate the positions where the movable stopper 35 for the valve closing direction comes into slidable contact with the fixed stopper 55 for the valve closing direction to be locked thereto and the rotor 30 and the valve shaft 21 reach the lowest positions.

The movable stopper 35 for the valve closing direction is threaded to the upper end portion of the male thread portion 21e of the valve shaft 21 and is retained and locked to the disk-shaped ceiling portion of the rotor 30. The movable stopper 35 for the valve closing direction includes a nut portion 35a which is threaded to the male thread portion 21e and has a hexagonal outer shape in the top view so that one side is formed in a circular-arc shape and a stopper portion 35s which has a rectangular cross-section having a predetermined width, a predetermined height, and a predetermined depth and protruding downward from the nut portion 35a.

Further, a movable stopper 36 for the valve opening direction coming into slidable contact with the fixed stopper 56 for the valve opening direction is threaded to the lower end portion of the male thread portion 21e of the valve shaft 21 and is retained and locked to the ceiling portion 23b of the valve holder 23. The movable stopper 36 for the valve opening direction includes a nut portion 36a threaded to the male thread portion 21e and a stopper portion 36s having a rectangular cross-section with a predetermined width, a predetermined height, and a predetermined depth and protruding upward from the nut portion 36a.

The rotor 30 includes a ceiling cylindrical magnet 31 and a connection body 32 integrally coupled to the ceiling portion thereof and the connection body 32 is fitted to the outside of the small-diameter portion 21b of the valve shaft 21 and is placed on the movable stopper 35 for the valve closing direction to be fixed to the small-diameter portion 21b by welding.

Here, as indicated by the dashed line in Fig. 1B, the lower surface side of the ceiling portion of the rotor 30 is provided with a concave portion 33 with a D cut portion of which both end portions are formed in a D-shape in the top view, one circular-arc side of the nut portion 35a of the movable stopper 35 for the valve closing direction is fitted to a circular-arc portion other than the D cut portion formed at the concave portion 33 in a slidable contact state, and the other two sides of the nut portion 35a are fitted into the D cut portion in a slidable contact state. Accordingly, the rotor 30, the movable stopper 35 for the valve closing direction, and the valve shaft 21 are elevated while rotating together.

Meanwhile, the stator 50 including a yoke 51, a bobbin 52, a coil 53, a resin mold 54, and the like is externally fitted to the outer periphery of the can 45. The stator 50 is positioned and fixed to a predetermined position of the valve main body 10 by a positioning tool (not illustrated) provided at the bottom portion thereof.

Further, the electric valve 1 is provided with a controller (not illustrated) having a microcomputer in order to control the operation (flow rate) of the electric valve 1. The controller performs a necessary calculation process on the basis of a signal from an operation panel (a remote controller) or sensors disposed inside a system provided with the electric valve 1 and supplies a driving pulse to the stator 50 of the electric valve 1.

Accordingly, the rotor 30 of the electric valve 1 rotates by the number of supply pulses. When the rotor 30 is rotated, the valve shaft 21 rotates together. At this time, the valve shaft 21 is elevated along with the valve body 25 by the screw feeding mechanism, so that a refrigerant passage flow rate is adjusted.

The operation of such an electric valve 1 will be described in more detail.

That is, when a pulse (referred to as a forward rotation pulse) which is a valve closing direction driving pattern is supplied to the stator 50, the rotor 30 and the valve shaft 21 are rotated in one direction (for example, a clockwise rotation direction in the top view), the valve shaft 21 and the movable stopper 35 for the valve closing direction are moved down in a rotation state by the screw feeding mechanism including the female thread portion 15i and the male thread portion 21e, and the valve body 25 sits on the valve seat portion 11a, so that the valve opening is closed.

At this time point, the movable stopper 35 still does not come into contact with the fixed stopper 55, the downward rotations of the rotor 30 and the valve shaft 21 are not stopped, the supply of pulse is continued until the valve body urging spring 24 is compressed by a predetermined amount, so that the rotor 30, the valve shaft 21, the valve holder 23, and the like move down while further rotating together in a state where the valve body 25 sits on the valve seat 11.

At this time, since the valve shaft 21 and the valve holder 23 move down with respect to the valve body 25, the valve body urging spring 24 is compressed and thus the downward moving forces of the valve shaft 21 and the valve holder 23 are absorbed. Subsequently, when the compression amount of the valve body urging spring 24 becomes a predetermined amount, the movable stopper 35 comes into slidable contact with the fixed stopper 55 to be locked thereto. Then, the rotor 30 and the valve shaft 21 reach the lowest positions. Accordingly, even when the pulse which is the valve closing direction driving pattern is supplied to the stator 50, the downward movement of the rotor 30 and the valve shaft 21 is forcedly stopped. Further, in the electric valve 1, since the rotation angle of the stepping motor and the pitch of the male thread portion 21e of the valve shaft 21 in accordance with the supply of one pulse are given in advance, the downward movement amount and the upward movement amount of the valve shaft 21 can be set by counting the number of the forward rotation pulses corresponding to the valve closing direction driving pattern and the backward rotation pulses corresponding to the valve opening direction driving pattern.

In this way, since the valve body urging spring 24 is compressed by the downward rotations of the rotor 30, the valve shaft 21, and the valve holder 23 continued until the control origin position where the movable stopper 35 comes into slidable contact with the fixed stopper 55 to be locked thereto even after the valve body 25 sits on the valve seat portion 11a so that the valve opening is closed, the valve body 25 is strongly pressed against the valve seat portion 11a (this state will be referred to as a pressed valve closed state) by the urging force of the valve body urging spring 24. Accordingly, it is possible to reliably prevent a valve leakage or the like.

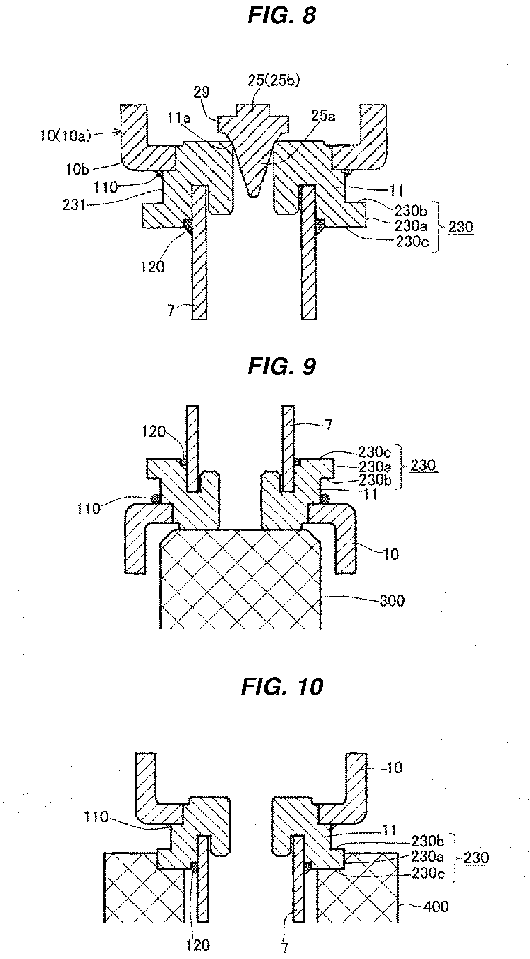

Meanwhile, when a pulse (referred to as a backward rotation pulse) which is a valve opening direction driving pattern is supplied to the stator 50 from the control origin position (the pressed valve closed state), the rotor 30 and the valve shaft 21 are rotated in a direction (for example, a counterclockwise rotation direction in the top view) opposite to the valve closing direction and the rotor 30, the valve shaft 21, the valve holder 23, and the movable stopper 36 for the valve opening direction move up while rotating together by the screw feeding mechanism including the female thread portion 15i and the male thread portion 21e. Accordingly, a pressing force for the valve body 25 is weakened, the valve body urging spring 24 is extended by a predetermined amount to return to a state without the urging force of the valve body urging spring 24, and the valve body 25 is separated from the valve seat portion 11a so that the valve opening is opened. In this case, as illustrated in Fig. 8, the lifted amount of the valve body 25 is determined in response to the number of pulses supplied to the stator 50. Then, when the supply of pulse is further continued, the valve is fully opened at last and the movable stopper 36 comes into slidable contact with the fixed stopper 56 for the valve opening direction to be locked thereto. Accordingly, the rotations and the upward movements of the rotor 30, the valve shaft 21, and the valve holder 23 can be forcedly stopped.

In the above-described electric valve 1, it is required to accurately set the control origin position and to allow the movable stopper 35 to reliably come into slidable contact with the fixed stopper 55 of the stopper mechanism for the valve closing direction at the origin position during assembly.

In a state where the valve shaft 21 is located at the control origin position, as illustrated in Figs. 1A and 1B, the movable stopper 35 for the valve closing direction is threaded into the valve shaft 21 to come into slidable contact with the fixed stopper 55 for the valve closing direction and is placed so as to be covered by the rotor 30, and the connection body 32 of the rotor 30 and the small-diameter portion 21b of the valve shaft 21 are fixed by welding or the like. Accordingly, the rotor 30 and the movable stopper 35 are elevated while rotating together and when the valve shaft 21 reaches the control origin position, the movable stopper 35 comes into slidable contact with the fixed stopper 55 to be locked thereto.

Next, when the lower end portion of the can 45 is sealed and bonded to the valve main body 10 by welding or the like and the stator 50 is positioned and fixed to the outer periphery of the can 45, the assembly of the electric valve 1 is completed.

### (Detailed Description of Method of Assembling Electric Valve 1)

Referring to Figs. 2 to 6, a method of assembling the electric valve 1 will be described in detail.

Fig. 2 is an enlarged view in the periphery of the valve seat 11 of the electric valve 1 after assembly. The valve main body 10, the valve seat 11, and the valve body 25 are formed of stainless steel. The upper surface of the cylindrical valve main body 10 is opened and the valve seat 11 is bonded to the lower surface thereof.

The outer peripheral surface of the side surface of the valve seat 11 is provided with the triangular groove 130 serving as a constricted portion. The triangular groove 130 can be formed by, for example, processing the valve seat 11 through lathe machining. Here, the constricted portion indicates a portion of which an outer diameter is narrower than other positions in the outer peripheral surface of the side surface of the valve seat 11.

Fig. 3 is a diagram illustrating a step of soldering each of the valve main body 10 and the second inlet/outlet 7 (the lower pipe) to the valve seat 11 illustrated in Fig. 2 among steps of assembling the electric valve 1.

The valve main body 10 is temporarily fixed to the upper portion of the valve seat 11 by crimping in advance and the second inlet/outlet 7 (the lower pipe) is inserted into the lower portion of the valve seat 11. Then, the valve seat 11 is placed on the first jig 300 while the upper surface of the cylindrical valve main body 10 faces downward and the second inlet/outlet 7 faces upward as illustrated in Fig. 3.

Then, the valve seat 11 with the valve seat portion 11a illustrated in Figs. 1A and 1B is soldered to the opening of the lower surface of the valve main body 10 by a first brazing material 110 and the second inlet/outlet 7 is soldered into a portion provided with the constricted portion of the valve seat 11 by a second brazing material 120. Additionally, in this embodiment, copper alloy is used as the first brazing material 110 and the second brazing material 120.

Here, the melted first brazing material 110 rises along the outer periphery of the valve seat 11 by a phenomenon such as surface tension and extended wetting and the brazing material is cured in an upward raised state. However, since the triangular groove 130 exists, the brazing material does not rise beyond the triangular groove 130.

Fig. 4 is a diagram illustrating a step of fixing the valve seat 11 by the jig among steps of assembling the electric valve 1 illustrated in Figs. 1A and 1B.

As described above, the lower end portion of the can 45 needs to be sealed and bonded to the valve main body 10 by welding or the like. For this welding, the valve main body is fixed to a second jig 400 by using the outer peripheral surface 11g at the lower side of the triangular groove 130 of the valve seat 11 as a positioning reference surface while the upper surface of the valve main body 10 faces upward in an upside down state from the state of Fig. 3.

In a state where the valve main body 10 is fixed to the second jig 400 through the valve seat 11, the flange-shaped disk 18 provided at the guide stem 15 is fixed to the upper end surface inner periphery 70 of the valve main body 10 so that the center axes of the valve seat portion (the valve opening) 11a and the valve shaft 21 provided with the valve body 25 illustrated in Figs. 1A and 1B are aligned with each other. Accordingly, the valve shaft 21 and the valve body 25 are fixed to be movable while being coaxial to the center axis of the valve seat portion 11a (the valve opening) of the valve main body 10 (the valve seat 11). Further, the lower end portion of the can 45 is sealed and bonded to the upper surface of the valve main body 10 to which the valve shaft 21 is fixed.

Here, the lower end portion of the can 45 may be sealed and bonded to the upper surface of the valve main body 10 so that the center axes of the can 45 and the valve main body 10 are aligned to each other while the valve main body 10 is fixed to the second jig 400 through the valve seat 11.

It is desirable that the triangular groove 130 be located at the substantially center of the outer periphery of the valve seat 11 in consideration of a state where the first brazing material 110 rises on the valve seat 11 and the second jig 400 and the valve seat 11 are fixed to each other.

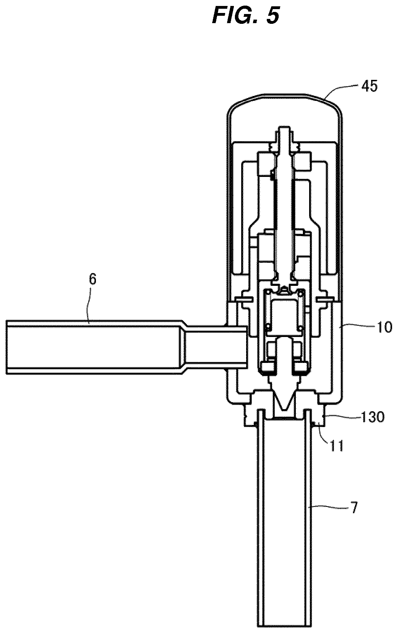

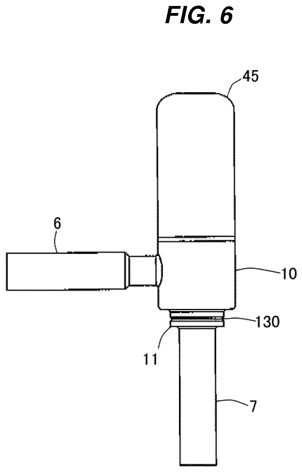

Fig. 5 is a diagram obtained after the valve main body 10 and the can 45 are sealed and bonded to each other and is a longitudinal sectional view obtained before the stator 50 illustrated in Figs. 1A and 1B are positioned and fixed to the outer periphery of the can 45. Further, Fig. 6 is an external view of Fig. 5. It is understood that the triangular groove 130 is formed along the outer peripheral surface of the side surface of the valve seat 11. Then, the stator 50 illustrated in Figs. 1A and 1B are positioned and fixed to the outer periphery of the can 45 sealed and bonded to the valve main body 10.

### (Operation and Effect)

Next, the operation and effect will be described. According to this embodiment, the triangular groove 130 serving as the constricted portion can be provided at the outer periphery of the valve seat 11 by a relatively easy processing such as lathe machining. Then, it is possible to prevent the melted first brazing material 110 from rising along the outer periphery of the valve seat 11 by the triangular groove 130. Thus, the second jig can accurately fix the outer peripheral surface 11g at the lower side of the triangular groove 130 of the valve seat 11 without sandwiching the first brazing material 110 at the time of sealing and bonding the lower end portion of the can 45 to the valve main body 10 by welding or the like. Accordingly, since it is possible to ensure the outer peripheral surface 11g at the lower side of the triangular groove 130 of the valve seat 11 as the positioning reference surface and to improve coaxiality among the valve shaft 21, the guide stem 15, and the valve seat portion 11a by aligning the center axes of the valve shaft 21 and the valve seat portion (the valve opening) 11a, it is possible to improve the controllability of the flow rate of the electric valve or the durability thereof. Further, since the positions of the valve main body 10 and the can 45 are aligned (for coaxiality of the center axes of the components), the rotor 30 does not contact the can 45 and the center axes of the rotor 30 and the coil 53 can be aligned. Accordingly, it is possible to improve the controllability or durability of the electric valve and to improve the yield.

### <Second Embodiment

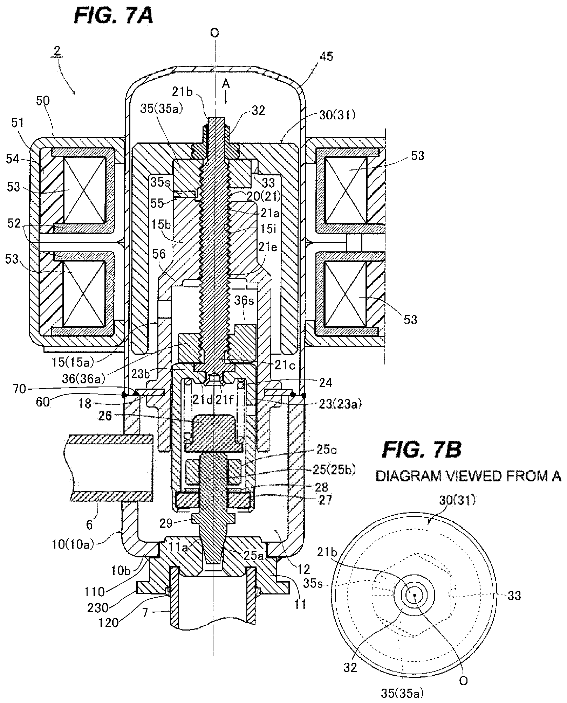

Fig. 7A is a longitudinal sectional view illustrating an electric valve according to a second embodiment of the invention, Fig. 7B is a diagram as viewed from A in Fig. 7A (a top view of a rotor), and Figs. 8 to 12 are diagrams used to describe a method of assembling the electric valve illustrated in Figs. 7A and 7B.

### (Configuration and Operation of Electric Valve 2)

The configuration and operation of an electric valve 2 are similar to those of Figs. 1A and 1B and are not described repeatedly. A difference from the first embodiment is that a convex portion 230 is formed at the outer peripheral surface of the side surface of the valve seat 11.

### (Detailed Description of Method of Assembling Electric Valve 2)

Referring to Figs. 8 to 12, a method of assembling the electric valve 2 will be described in detail.

Fig. 8 is an enlarged view in the periphery of the valve seat 11 of the electric valve 2 after assembly. The convex portion 230 is formed at the outer peripheral surface of the side surface at the lower side of the valve seat 11 to form a constricted portion. The convex portion 230 may be provided by cutting the valve seat 11. In this way, when a side surface 230b of the convex portion 230 is formed at a right angle with respect to the center axis of the valve shaft, a movement distance until the first brazing material 110 reaches the outer peripheral surface 230a of the convex portion 230 can be saved and the melted brazing material easily stays at the constricted portion. Here, the constricted portion indicates a portion 231 and the convex portion 230 formed so that an outer diameter is narrower than other positions in the outer peripheral surface of the side surface of the valve seat 11 due to the cutting.

Fig. 9 is a diagram illustrating a step of soldering each of the valve main body 10 and the second inlet/outlet 7 (the lower pipe) to the valve seat 11 illustrated in Figs. 7A and 7B among steps of assembling the electric valve 2.

The valve main body 10 is temporarily fixed to the upper portion of the valve seat 11 by crimping in advance and the second inlet/outlet 7 (the lower pipe) is inserted into the lower portion of the valve seat 11. Then, the valve seat 11 is placed on the first jig 300 while the upper surface of the cylindrical valve main body 10 faces downward and the second inlet/outlet 7 faces upward as illustrated in Fig. 9.

Then, the valve seat 11 with the valve seat portion 11a illustrated in Figs. 7A and 7B are soldered to the opening of the lower surface of the valve main body 10 by the first brazing material 110 and the second inlet/outlet 7 is soldered into a portion provided with the constricted portion of the valve seat 11 by the second brazing material 120. Here, the melted first brazing material 110 rises along the outer periphery of the valve seat 11 by a phenomenon such as surface tension and extended wetting and the brazing material is cured in an upward raised state. However, since the convex portion 230 is provided, the melted brazing material does not move to the outer peripheral surface 230a of the convex portion 230 and stays at the lower side of the side surface 230b (the gravity direction).

Fig. 10 is a diagram illustrating a step of fixing the valve seat 11 by the jig among steps of assembling the electric valve 2 illustrated in Figs. 7A and 7B.

As described above, the lower end portion of the can 45 needs to be sealed and bonded to the valve main body 10 by welding or the like. For this welding, the valve main body is fixed to the second jig 400 by using the outer peripheral surface 230a and the lower surface 230c of the convex portion 230 of the valve seat 11 as the positioning reference surface while the upper surface of the valve main body 10 faces upward in an upside down state from the state of Fig. 9.

In a state where the valve main body 10 is fixed to the second jig 400 through the valve seat 11, the flange-shaped disk 18 provided at the guide stem 15 is fixed to the upper end surface inner periphery 70 of the valve main body 10 so that the center axes of the valve seat portion (the valve opening) 11a and the valve shaft 21 provided with the valve body 25 illustrated in Figs. 7A and 7B are aligned with each other. Accordingly, the valve shaft 21 and the valve body 25 are fixed to be movable while being coaxial to the center axis of the valve seat portion 11a (the valve opening) of the valve main body 10 (the valve seat 11). Further, the lower end portion of the can 45 is sealed and bonded to the upper surface of the valve main body 10 to which the valve shaft 21 is fixed.

Here, the lower end portion of the can 45 may be sealed and bonded to the upper surface of the valve main body 10 so that the center axes of the can 45 and the valve main body 10 are aligned to each other while the valve main body 10 is fixed to the second jig 400 through the valve seat 11.

Since the outer peripheral surface 230a of the convex portion 230 is positioned while being brought into contact with the second jig 400, it is desirable that the convex portion 230 be provided at the lower side of the valve seat 11 (that is, a side separated from the valve main body 10).

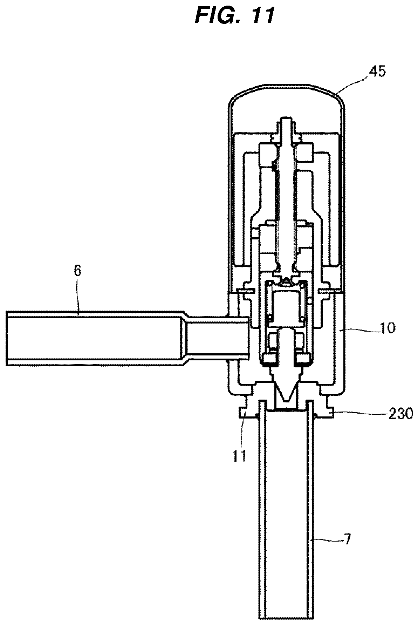

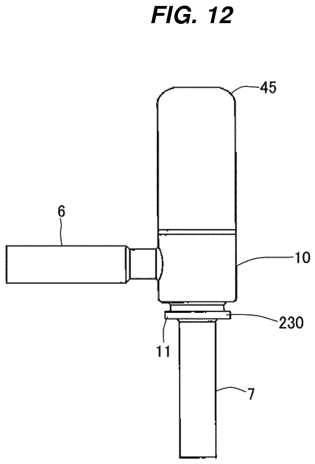

Fig. 11 is diagram obtained after the valve main body 10 and the can 45 are sealed and bonded and is a longitudinal sectional view obtained before the stator 50 illustrated in Figs. 7A and 7B are positioned and fixed to the outer periphery of the can 45. Further, Fig. 12 is an external view of Fig. 11. It is understood that the convex portion 230 is formed along the outer peripheral surface of the side surface of the valve seat 11. Then, the stator 50 illustrated in Figs. 7A and 7B are positioned and fixed to the outer periphery of the can 45 sealed and bonded to the valve main body 10.

### (Operation and Effect)

Next, the operation and effect will be described. According to this embodiment, the convex portion 230 serving as the constricted portion can be provided at the outer peripheral surface of the side surface of the valve seat 11 by a relatively easy processing such as cutting. Then, it is possible to prevent the melted first brazing material 110 from rising along the outer periphery of the valve seat 11 by the convex portion 230. Thus, the second jig can accurately fix the outer peripheral surface 230a of the convex portion 230 of the valve seat 11 without sandwiching the first brazing material 110 at the time of sealing and bonding the lower end portion of the can 45 to the valve main body 10 by welding or the like. Accordingly, since it possible to ensure the outer peripheral surface 230a and the lower surface 230c of the convex portion 230 of the valve seat 11 as the positioning reference surface and to improve coaxiality among the valve shaft 21, the guide stem 15, and the valve seat portion 11a by aligning the center axes of the valve shaft 21 and the valve seat portion (the valve opening) 11a, it is possible to improve the controllability of the flow rate of the electric valve or the durability thereof. Further, since the positions of the valve main body 10 and the can 45 are aligned (for coaxiality of the center axes of the components), the rotor 30 does not contact the can 45 and the center axes of the rotor 30 and the coil 53 can be aligned. Accordingly, it is possible to improve the controllability or durability of the electric valve and to improve the yield.

Further, even when the amount of the first brazing material 110 is larger than the triangular groove 130 of the first embodiment, the first brazing material 110 rising along the valve seat 11 can be retained. According to this embodiment, it is possible to restrict a phenomenon in which the melted brazing material rises along the outer periphery of the valve seat.

As described above, the first embodiment and the second embodiment have been described as the embodiments of the invention, but the invention is not limited to the above-described embodiments and includes various modified examples. For example, the invention is not limited to all configurations (structures) provided in the above-described embodiments. Further, a part of the configuration of an embodiment may be deleted or replaced by the configuration of another embodiment or the configuration of another embodiment may be added to the configuration of an embodiment.

For example, in the above-described embodiments, the triangular groove 130 is provided at one position, but may be provided at two or more positions. Further, the convex portion 230 is provided at one side, but the convex portion may be provided at both sides by cutting the center of the outer peripheral surface of the side surface of the valve seat 11.

### EXPLANATIONS OF LETTERS OR NUMERALS

- 1, 2: electric valve
- 6: first inlet/outlet (horizontal pipe)
- 7: second inlet/outlet (lower pipe)
- 10: valve main body
- 11: valve seat
- 11a: valve seat portion (valve opening)
- 15: guide stem
- 15i: female thread portion
- 20: valve shaft assembly
- 21: valve shaft
- 21e: male thread portion
- 23: valve holder
- 24: valve body urging spring
- 25: valve body
- 26: spring bearing member
- 27: bottom plate portion (movable stopper for assembly)
- 29: flange portion (fixed stopper for assembly)
- 30: rotor
- 35: movable stopper for valve closing direction
- 36: movable stopper for valve opening direction
- 50: stator
- 53: coil
- 55: fixed stopper for valve closing direction
- 56: fixed stopper for valve opening direction
- 110: first brazing material
- 120: second brazing material
- 130: triangular groove
- 230: convex portion
- 300: first jig
- 400: second jig

## Claims

1. An electric valve assembly method comprising:
forming a constricted portion at an outer peripheral surface of a side surface of a valve seat (11);
bonding a valve seat (11) having a valve seat portion (11a) to a lower surface of a cylindrical valve main body (10) while an upper surface of the valve main body (10) faces downward;
fixing the valve main body (10) to a jig by using a lower outer peripheral surface of the constricted portion as a positioning reference surface while the upper surface of the valve main body (10) faces upward after the valve seat (11) is bonded to the valve main body (10);
fixing a valve shaft (21) provided with a valve body (25) at the side of the valve body (25) by aligning center axes of the valve shaft (21) and the valve seat portion (11a) while the valve main body (10) is fixed to the jig; and
sealing and bonding a lower end portion of a can (45) to an upper surface of the valve main body (10) having the valve shaft (21) fixed thereto.

2. The electric valve assembly method according to claim 1,
wherein the lower end portion of the can (45) is sealed and bonded to the upper surface of the valve main body (10) by aligning center axes of the can (45) and the valve main body (10) while the valve main body (10) is fixed to the jig.

3. The electric valve assembly method according to claim 1,
wherein a stator (50) is positioned and fixed to an outer periphery of the can (45) sealed and bonded to the valve main body (10).

4. The electric valve assembly method according to claim 1,
wherein a triangular groove (130) is formed as the constricted portion.

5. The electric valve assembly method according to claim 1,
wherein a convex portion (230) is formed at a lower side of the constricted portion.

## Patentansprüche

1. Verfahren zum Zusammenbau eines elektrischen Ventils, umfassend:
Bilden eines verengten Bereichs an einer äußeren Umfangsfläche einer Seitenfläche eines Ventilsitzes (11);
Verbinden eines Ventilsitzes (11), der einen Ventilsitzbereich (11a) aufweist, mit einer unteren Fläche eines zylindrischen Ventilhauptkörpers (10), während eine obere Fläche des Ventilhauptkörpers (10) nach unten zeigt;
Fixieren des Ventilhauptkörpers (10) an einem Montagegestell unter Verwendung einer unteren äußeren Umfangsfläche des verengten Bereichs als eine Positionierungs-Referenzfläche während die obere Fläche des Ventilhauptkörpers (10) nach oben zeigt, nachdem der Ventilsitz (11) mit dem Ventilhauptkörper (10) verbunden ist;
Fixieren eines Ventilschafts (21), der mit einem Ventilkörper (25) vorgesehen ist, an der Seite des Ventilkörpers (25) durch Ausrichten von zentralen Achsen des Ventilschafts (21) und des Ventilsitzbereichs (11a) während der Ventilhauptkörper (10) an dem Montagegestell fixiert ist; und
Versiegeln und Verbinden eines unteren Endbereichs einer Büchse (45) mit einer oberen Fläche des Ventilhauptkörpers (10), an dem der Ventilschaft (21) fixiert ist.

2. Verfahren zum Zusammenbau eines elektrischen Ventils gemäß Anspruch 1,
wobei der untere Endbereich der Büchse (45) mit der oberen Fläche des Ventilhauptkörpers (10) versiegelt und verbunden ist, indem zentrale Achsen der Büchse (45) und des Ventilhauptkörpers (10) ausgerichtet werden während der Ventilhauptkörper (10) an dem Montagegestell fixiert ist.

3. Verfahren zum Zusammenbau eines elektrischen Ventils gemäß Anspruch 1, wobei ein Stator (50) an einem äußeren Umfang der Büchse (45) positioniert und fixiert ist, die mit dem Ventilhauptkörper (10) versiegelt und verbunden ist.

4. Verfahren zum Zusammenbau eines elektrischen Ventils gemäß Anspruch 1, wobei eine dreieckige Nut (130) als ein verengter Bereich ausgebildet ist.

5. Verfahren zum Zusammenbau eines elektrischen Ventils gemäß Anspruch 1, wobei ein konvexer Bereich (230) an einer unteren Seite des verengten Bereichs ausgebildet ist.

## Revendications

1. Procédé pour assembler une valve électrique comprenant :
former une partie contrainte à une surface périphérique extérieure d'une surface latérale d'un siège de valve (11);
lier un siège de valve (11) ayant une partie de siège de valve (11a) à une surface inférieure d'un corps principal de valve cylindrique (10) pendant qu'une surface supérieure du corps principal de valve (10) est orientée vers le bas;
fixer le corps principal de valve (10) à un gabarit de montage en utilisant une surface externe inférieure périphérique de la partie contrainte comme une surface de référence de positionnement pendant que la surface supérieure du corps principal de valve (10) est orientée vers le haut après que le siège de valve (11) est lié au corps principal de valve (10);
fixer une tige de valve (21) équipée avec un corps de valve (25) au côté du corps de valve (25) en alignant des axes centrales de la tige de valve (21) et de la partie de siège de valve (11a) pendant que le corps principal (10) est fixé au gabarit de montage; et
sceller et lier une partie terminale inférieure d'une boîte (45) à une surface supérieure du corps principal de valve (10) ayant la tige de valve (21) fixée à celle-ci.

2. Le procédé pour assembler une valve électrique selon revendication 1, dans lequel
la partie terminale inférieure de la boîte (45) est scellée et liée à la surface supérieure du corps principal de valve (10) en alignant des axes centraux de la boîte (45) et du corps principal de valve (10) pendant que le corps principal de valve (10) est fixé au gabarit de montage.

3. Le procédé pour assembler une valve électrique selon revendication 1,
dans lequel un stator (50) est positionné et fixé à une périphérie externe de la boîte (45) qui est scellée et liée au corps principal de valve (10).

4. Le procédé pour assembler une valve électrique selon revendication 1, dans lequel une rainure triangulaire (130) est formée comme la partie contrainte.

5. Le procédé pour assembler une valve électrique selon revendication 1,
dans lequel une partie convexe (230) est formée à un côté inférieur de la partie contrainte.
